(19) Europäisches Patentamt / European Patent Office / Office européen des brevets

(11) **EP 4 343 949 B1**

(12) **EUROPEAN PATENT SPECIFICATION**

(45) Date of publication and mention
of the grant of the patent:
**01.07.2026   Bulletin 2026/27**

(21) Application number: **22811698.4**

(22) Date of filing: **27.05.2022**

(51) International Patent Classification (IPC):
*H01M 50/451* (2021.01)     *H01M 50/489* (2021.01)
*H01G 11/52* (2013.01)      *H01M 10/052* (2010.01)
*H01M 10/04* (2006.01)      *H01M 10/0525* (2010.01)
*H01M 50/426* (2021.01)     *H01M 50/443* (2021.01)
*H01M 50/457* (2021.01)     *H01M 50/417* (2021.01)
*H01M 50/446* (2021.01)

(52) Cooperative Patent Classification (CPC):
**H01M 10/0525; H01G 11/52; H01M 10/0422;
H01M 50/417; H01M 50/426; H01M 50/443;
H01M 50/446; H01M 50/451; H01M 50/457;
H01M 50/489; Y02E 60/10**

(86) International application number:
**PCT/KR2022/007613**

(87) International publication number:
**WO 2022/250507 (01.12.2022 Gazette 2022/48)**

(54) **SEPARATOR FOR ELECTROCHEMICAL DEVICE AND ELECTROCHEMICAL DEVICE INCLUDING THE SAME**

SEPARATOR FÜR ELEKTROCHEMISCHE VORRICHTUNG UND ELEKTROCHEMISCHE VORRICHTUNG DAMIT

SÉPARATEUR POUR DISPOSITIF ÉLECTROCHIMIQUE, ET DISPOSITIF ÉLECTROCHIMIQUE COMPRENANT CE DERNIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2021   KR 20210069553**

(43) Date of publication of application:
**27.03.2024   Bulletin 2024/13**

(73) Proprietor: **LG Energy Solution, Ltd.**
**Seoul 07335 (KR)**

(72) Inventors:
• **KIM, Soo-Jung**
**Daejeon 34122 (KR)**
• **RYU, Duk-Hyun**
**Daejeon 34122 (KR)**

(74) Representative: **Hoffmann Eitle**
**Patent- und Rechtsanwälte PartmbB**
**Arabellastraße 30**
**81925 München (DE)**

(56) References cited:
KR-A- 20100 058 579     KR-A- 20130 123 568
KR-A- 20130 123 568     KR-A- 20150 050 498
KR-A- 20170 037 453     KR-A- 20200 078 011
KR-A- 20200 078 011     US-A1- 2017 373 292
US-A1- 2020 203 694     US-A1- 2022 037 741

**Description**

TECHNICAL FIELD

The present disclosure relates to a separator for an electrochemical device and an electrochemical device including the same.

The present application claims priority to Korean Patent Application No. 10-2021-0069553 filed on May 28, 2021 in the Republic of Korea.

BACKGROUND ART

Recently, energy storage technology has been given an increasing attention. As the application of energy storage technology has been extended to energy for cellular phones, camcorders and notebook PCs and even to energy for electric vehicles, there has been an increasing need for providing batteries used as power sources for such electronic devices with high energy density. Lithium secondary batteries are those satisfying such a need best. Therefore, active studies have been conducted about such lithium secondary batteries.

Such a lithium secondary battery includes a positive electrode, a negative electrode, an electrolyte and a separator. Particularly, it is required for the separator to have insulation property for separating and electrically insulating the positive electrode and the negative electrode from each other and high ion conductivity for increasing lithium-ion permeability based on high porosity.

A polyolefin separator using a polyolefin-based porous substrate has been used widely as such a separator. However, the polyolefin separator shows a severe heat shrinking behavior under a high temperature condition due to its material property and characteristics during its manufacturing process, thereby causing a safety-related problem, such as an internal short-circuit.

Recently, in order to solve the safety-related problem of the polyolefin separator at high temperature, there has been suggested a separator including the polyolefin separator as a porous substrate, and a mixture of fine inorganic particles with a binder polymer, coated on at least one surface of the porous substrate.

Known separators can be found in KR 2020 0078011 A, KR 2013 0123568 A, US 2020/203694 A1 and US 2017/373292 A1.

However, such a separator is problematic in that it cannot ensure assembling processability due to the generation of the problems of meandering and wrinkling in a process for assembling a battery.

DISCLOSURE

Technical Problem

The present disclosure is designed to solve the problems of the related art, and therefore the present disclosure is directed to providing a separator for an electrochemical device which has improved safety at high temperature and ensures assembling processability, and an electrochemical device including the same.

Technical Solution

In one aspect of the present disclosure, there is provided a separator for an electrochemical device according to any one of the following embodiments.

According to the first embodiment, there is provided a separator according to claim 1.

According to the second embodiment, there is provided the separator for an electrochemical device as defined in the first embodiment, wherein the second inorganic particles have an average particle diameter 1.01-50 times of the average particle diameter of the first inorganic particles.

According to the third embodiment, there is provided the separator for an electrochemical device as defined in the first or the second embodiment, wherein the second inorganic particles have an average particle diameter of 150-800 nm.

According to the fourth embodiment, there is provided the separator for an electrochemical device as defined in any one of the first to the third embodiments, wherein the weight ratio of the first inorganic particles to the second inorganic particles in the second organic/inorganic composite porous layer is 40:60-92:8.

According to the seventh embodiment, there is provided the separator for an electrochemical device as defined in any one of the first to the sixth embodiments, wherein the second inorganic particles include $BaTiO_3$, $Pb(Zr,Ti)O_3$ (PZT), $Pb_{1-x}La_xZr_{1-y}Ti_yO_3$ (PLZT, wherein $0 < x < 1$, $0 < y < 1$), $Pb(Mg_{1/3}Nb_{2/3})O_3$-$PbTiO_3$ (PMN-PT), hafnia ($HfO_2$), $SrTiO_3$, $SnO_2$, $CeO_2$, $MgO$, $Mg(OH)_2$, $NiO$, $CaO$, $ZnO$, $ZrO_2$, $SiO_2$, $Y_2O_3$, $Al_2O_3$, $AlOOH$, $Al(OH)_3$, $SiC$, $TiO_2$, lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x <$

2, $0 < y < 1$, $0 < z < 3$), (LiAlTiP)$_x$O$_y$-based glass ($1 < x < 4$, $0 < y < 13$), lithium lanthanum titanate (Li$_x$La$_y$TiO$_3$, $0 < x < 2$, $0 < y < 3$), lithium germanium thiophosphate (Li$_x$Ge$_y$P$_z$S$_w$, $0 < x < 4$, $0 < y < 1$, $0 < z < 1$, $0 < w < 5$), lithium nitride (Li$_x$N$_y$, $0 < x < 4$, $0 < y < 2$), SiS$_2$-based glass (Li$_x$Si$_y$S$_z$, $0 < x < 3$, $0 < y < 2$, $0 < z < 4$), P$_2$S$_5$-based glass (Li$_x$P$_y$S$_z$, $0 < x < 3$, $0 < y < 3$, $0 < z < 7$), or two or more of them.

According to the eighth embodiment, there is provided the separator for an electrochemical device as defined in any one of the first to the seventh embodiments, wherein the surface of the second organic/inorganic composite porous layer has an arithmetic mean roughness of 400-1000 nm.

According to the ninth embodiment, there is provided the separator for an electrochemical device as defined in any one of the first to the eighth embodiments, which shows a heat shrinkage of 10% or less in each of the machine direction (MD) and the transverse direction (TD), as determined after allowing the separator to stand at 180°C for 1 hour.

According to the tenth embodiment, there is provided the separator for an electrochemical device as defined in any one of the first to the ninth embodiments, wherein the first binder polymer includes poly(vinylidene fluoride-co-hexafluoropropylene), poly(vinylidene fluoride-co-chlorotrifluoroethylene), poly(vinylidene fluoride-co-tetrafluoroethylene), poly(vinylidene fluoride-co-trichloroethylene), acrylic copolymer, styrene-butadiene copolymer, poly(acrylic acid), poly(methyl methacrylate), poly(butyl acrylate), poly(acrylonitrile), poly(vinyl pyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethylpullulan, cyanoethylpolyvinylalchol, cyanoethyl cellulose, cyanoethyl sucrose, pullulan, or two or more of them.

According to the eleventh embodiment, there is provided the separator for an electrochemical device as defined in any one of the first to the tenth embodiments, wherein the second binder polymer includes poly(vinylidene fluoride-co-hexafluoropropylene), poly(vinylidene fluoride-co-chlorotrifluoroethylene), poly(vinylidene fluoride-co-tetrafluoroethylene), poly(vinylidene fluoride-co-trichloroethylene), acrylic copolymer, styrene-butadiene copolymer, poly(acrylic acid), poly(methyl methacrylate), poly(butyl acrylate), poly(acrylonitrile), poly(vinyl pyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethylpullulan, cyanoethylpolyvinylalchol, cyanoethyl cellulose, cyanoethyl sucrose, pullulan, or two or more of them.

In another aspect of the present disclosure, there is provided an electrochemical device according to any one of the following embodiments.

According to the twelfth embodiment, there is provided an electrochemical device including a positive electrode, a negative electrode and a separator interposed between the positive electrode and the negative electrode, wherein the separator is the separator for an electrochemical device as defined in any one of the first to the eleventh embodiments.

According to the thirteenth embodiment, there is provided the electrochemical device as defined in the twelfth embodiment, which is a cylindrical lithium secondary battery.

Advantageous Effects

The separator for an electrochemical device according to an embodiment of the present disclosure includes the first inorganic particles having an average particle diameter of 1-100 nm on one surface of the porous polymer substrate to provide improved high-temperature safety, and includes an organic/inorganic composite porous layer including the second inorganic particles having a larger average particle diameter than the average particle diameter of the first inorganic particles, in combination with the first inorganic particles, to ensure assembling processability.

The separator for an electrochemical device according to an embodiment of the present disclosure may show a heat shrinkage of 10% or less in each of the machine direction (MD) and the transverse direction (TD), as determined after allowing the separator to stand at 180°C for 1 hour.

The surface of the second organic/inorganic composite porous layer of the separator for an electrochemical device according to an embodiment of the present disclosure may have an arithmetic mean roughness of 400-1000 nm.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a schematic view illustrating the separator for an electrochemical device according to an embodiment of the present disclosure.
FIG. 2 is a roughness curve plotted by enlarging the section of the surface of the second organic/inorganic composite porous layer of the separator for an electrochemical device according to an embodiment of the present disclosure.
FIG. 3 shows the surface roughness of the second organic/inorganic composite porous layer of the separator for an electrochemical device according to Example 1.

FIG. 4 shows the surface roughness of the second organic/inorganic composite porous layer of the separator for an electrochemical device according to Example 2.

FIG. 5 shows the surface roughness of the second organic/inorganic composite porous layer of the separator for an electrochemical device according to Example 3.

FIG. 6 shows the surface roughness of the second organic/inorganic composite porous layer of the separator for an electrochemical device according to Example 4.

<u>BEST MODE</u>

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In one aspect of the present disclosure, there is provided a separator for an electrochemical device, including:

a porous polymer substrate;

a first organic/inorganic composite porous layer disposed on one surface of the porous polymer substrate and including first inorganic particles and a first binder polymer; and

a second organic/inorganic composite porous layer disposed on the other surface of the porous polymer substrate and including the first inorganic particles, second inorganic particles and a second binder polymer,

wherein the first inorganic particles have an average particle diameter of 1-100 nm, and

the second inorganic particles have an average particle diameter larger than the average particle diameter of the first inorganic particles.

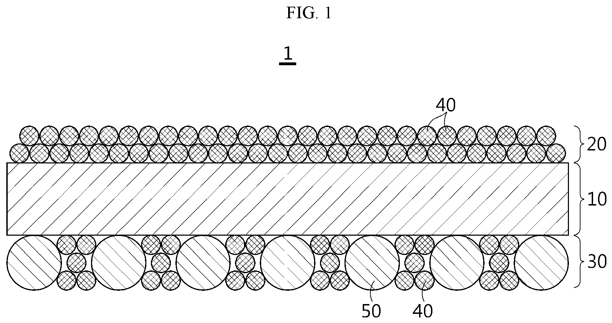

FIG. 1 is a schematic view illustrating the separator for an electrochemical device according to an embodiment of the present disclosure.

Referring to FIG. 1, the separator 1 for an electrochemical device includes a porous polymer substrate 10.

According to an embodiment of the present disclosure, the porous polymer substrate 10 is not particularly limited, as long as it may be used generally as a material for a separator for a lithium secondary battery. The porous polymer substrate 10 may be a thin film including a polymeric material, and non-limiting examples of such a polymeric material include at least one selected from polymer resins, such as polyolefin resin, polyethylene terephthalate, polybutylene terephthalate, polyacetal, polyamide, polycarbonate, polyimide, polyetherether ketone, polyether sulfone, polyphenylene oxide, polyphenylene sulfide, and polyethylene naphthalene. In addition, the porous polymer substrate 10 may include a non-woven web or a porous polymer film made of such a polymeric material, or a laminate of two or more layers thereof. Particularly, the porous polymer substrate 10 may be any one of the following a) to e):

a) A porous film formed by melting and extruding a polymer resin;

b) A multilayer film formed by stacking two or more layers of the porous films of a);

c) A non-woven web formed by integrating filaments obtained by melting/spinning a polymer resin;

d) A multilayer film formed by stacking two or more layers of the non-woven webs of c); and

e) A multilayered porous film including two or more of a) to d).

According to an embodiment of the present disclosure, although there is no particular limitation in the thickness of the porous polymer substrate 10, the thickness may be 1-100 $\mu$m, or 1-30 $\mu$m. When the porous polymer substrate 10 has the above-defined range of thickness, it is possible to prevent the separator from being damaged easily during the use of a battery and to ensure energy density.

Meanwhile, there is no particular limitation in the average pore size and porosity of the porous polymer substrate, as long as they are suitable for electrochemical device applications, and the average pore size may be 0.01-50 $\mu$m, or 0.1-20 $\mu$m, and the porosity may be 5-95%. When the pore size and porosity satisfy the above-defined ranges, it is easy to prevent the porous polymer substrate 10 from functioning as electrical resistance, and it is possible to maintain the mechanical properties of the porous polymer substrate 10 with ease.

According to the present disclosure, the term 'average pore size' means the arithmetic average value of pore sizes. The porosity and pore size of the porous polymer substrate 10 may be determined from scanning electron microscopic (SEM) images, by using a mercury porosimeter or capillary flow porosimeter, or through the BET6-point method based on nitrogen gas adsorption flow using a porosimetry analyzer (Belsorp-II mini, Bell Japan Inc.).

Referring to FIG. 1, the separator 1 for an electrochemical device includes the first organic/inorganic composite porous layer 20 on one surface of the porous polymer substrate. The first organic/inorganic composite porous layer 20 includes the first inorganic particles 40 and the first binder polymer.

The first organic/inorganic composite porous layer 20 includes the first inorganic particles 40, and the first binder polymer that attaches the first inorganic particles 40 to one another so that they may retain their binding states (i.e. the first binder polymer interconnects and fixes the first inorganic particles 40), and the first inorganic particles may be bound to the porous polymer substrate 10 by the first binder polymer.

The first inorganic particles 40 have an average particle diameter of 1-100 nm. When the first inorganic particles 40 have the above-defined range of average particle diameter, the inorganic particles may be distributed more densely per unit area of the separator, and thus the separator may have improved thermal safety. Since the first organic/inorganic composite porous layer 20 includes the first inorganic particles 40 having an average particle diameter of 1-100 nm, it is possible to prevent the porous polymer substrate 10 from undergoing a severe heat shrinking behavior at high temperature, and thus to provide the separator with improved safety.

According to an embodiment of the present disclosure, the first inorganic particles 40 may have an average particle diameter of 20-100 nm, 20-50 nm, or 20-30 nm. When the first inorganic particles 40 satisfy the above-defined range of average particle diameter, it is possible to further improve the heat shrinkage of the separator at high temperature. For example, the separator may show a heat shrinkage of 10% or less, 5% or less, 0-5%, or 0-2%, in each of the machine direction (MD) and the transverse direction (TD), as determined after allowing the separator to stand at 180°C for 1 hour.

As used herein, 'machine direction' refers to the direction of progress during the continuous production of a separator, i.e. the longitudinal direction of the separator, while 'transverse direction' refers to the transverse direction to the machine direction, i.e. the direction perpendicular to the direction of progress during the continuous production of a separator, i.e. the direction perpendicular to the longitudinal direction of the separator.

Herein, the average particle diameter of the inorganic particles means $D_{50}$ particle diameter, and '$D_{50}$' means the particle diameter at the point of 50% in the particle number accumulated distribution as a function of particle diameter. The particle diameter may be determined by using the laser diffraction method. Particularly, a powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, $D_{50}$ may be determined by calculating the particle diameter at the point of 50% in the particle number accumulated distribution depending on particle diameter in the analyzer system.

According to an embodiment of the present disclosure, the first inorganic particles 40 may include fumed inorganic particles. As used herein, 'fumed inorganic particles' refers to inorganic particles including three-dimensional aggregates (agglomerates) formed from secondary particles formed by interconnection of primary particles through collision, wherein the primary particles are formed by hydrolysis in flame at 1,000°C or higher. When the first inorganic particles 40 include fumed inorganic particles, it is easy to provide the first inorganic particles 40 with an average particle diameter of 1-100 nm, 20-50 nm, 1-15 nm, 15-100 nm, 15-50 nm, or 15-20 nm.

According to the present disclosure, the first inorganic particles 40 may include fumed alumina, fumed silica, fumed titanium dioxide, or two or more of them.

Particularly, when the first inorganic particles include fumed alumina, it is easy to provide the separator with a heat shrinkage of 5% or less, 0-5%, or 0-2%, in each of the machine direction (MD) and the transverse direction (TD), as determined after allowing the separator to stand at 180°C for 1 hour.

The first binder polymer may be a binder polymer used conventionally for forming an organic/inorganic composite porous layer. The first binder polymer may have a glass transition temperature ($T_g$) of -200 to 200°C. When the first binder polymer satisfies the above-defined range of glass transition temperature, it can provide the finished first organic/inorganic composite porous layer 20 with improved mechanical properties, such as flexibility and elasticity. The first binder polymer may have ion conductivity. When the first binder polymer has ion conductivity, it is possible to further improve the performance of a battery. The first binder polymer may have a dielectric constant ranging from 1.0 to 100 (measured at a frequency of 1 kHz), or from 10 to 100. When the first binder polymer has the above-defined range of dielectric constant, it is possible to improve the salt dissociation degree in an electrolyte.

According to an embodiment of the present disclosure, the first binder polymer may include poly(vinylidene fluoride-co-hexafluoropropylene), poly(vinylidene fluoride-co-chlorotrifluoroethylene), poly(vinylidene fluoride-co-tetrafluoroethylene), poly(vinylidene fluoride-co-trichloroethylene), acrylic copolymer, styrene-butadiene copolymer, poly(acrylic acid), poly(methyl methacrylate), poly(butyl acrylate), poly(acrylonitrile), poly(vinyl pyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethylpullulan, cyanoethylpolyvinylalchol, cyanoethyl cellulose, cyanoethyl sucrose, pullulan, or two or more of them.

The acrylic copolymer may include, but is not limited to: ethyl acrylate-acrylic acid-N,N-dimethyl acrylamide copolymer, ethyl acrylate-acrylic acid-2-(dimethylamino)ethyl acrylate copolymer, ethyl acrylate-acrylic acid-N,N-diethylacrylamide copolymer, ethyl acrylate-acrylic acid-2-(diethylamino)ethyl acrylate copolymer, or two or more of them.

According to an embodiment of the present disclosure, the weight ratio of the first inorganic particles 40 to the first binder polymer is determined considering the thickness, pore size and porosity of the first organic/inorganic composite porous layer 20, and may be 50:50-99.9:0.1, or 95:5-99.9:0.1. When the weight ratio of the first inorganic particles 40 to the first binder polymer satisfies the above-defined range, it is possible to ensure vacant spaces formed among the first inorganic particles 40 sufficiently, and thus to ensure the pore size and porosity of the first organic/inorganic composite porous layer 20 with ease. In addition, it is possible to ensure the adhesion among the first inorganic particles 40 and the adhesion between the first inorganic particles 40 and the porous polymer substrate 10 with ease.

According to an embodiment of the present disclosure, the first organic/inorganic composite porous layer 20 may further include additives, such as a dispersant and/or a thickener. According to an embodiment of the present disclosure, the additives may include citric acid, hydroxyethyl cellulose (HEC), hydroxypropyl cellulose (HPC), ethylhydroxyethyl cellulose (EHEC), methyl cellulose (MC), carboxymethyl cellulose (CMC), hydroxyalkylmethyl cellulose, cyanoethylene polyvinyl alcohol, or two or more of them.

According to an embodiment of the present disclosure, the first organic/inorganic composite porous layer 20 may have a structure in which the first inorganic particles 40 are bound to one another by the first binder polymer, while they are packed in contact with one another. **In** this manner, interstitial volumes are formed among the first inorganic particles 40, and the interstitial volumes among the first inorganic particles 40 may become vacant spaces to form pores.

According to an embodiment of the present disclosure, the first organic/inorganic composite porous layer 20 may have an average pore size of 0.001-10 $\mu$m. The average pore size of the first organic/inorganic composite porous layer 20 may be determined by using the capillary flow porometry. The capillary flow porometry measures the diameter of the smallest pore in the thickness direction. Therefore, in order to determine the average pore size of the first organic/inorganic composite porous layer 20 alone by the capillary flow porometry, it is required to separate the first organic/inorganic composite porous layer 20 from the porous polymer substrate 10, and to surround the separated first organic/inorganic composite porous layer 20 with a non-woven web capable of supporting the same. Herein, the non-woven web should have a significantly larger pore size as compare to the pore size of the first organic/inorganic composite porous layer 20.

According to an embodiment of the present disclosure, the first organic/inorganic composite porous layer 20 may have a porosity of 5-95%, 10-95%, 20-90%, or 30-80%. The porosity corresponds to a value obtained by subtracting the volume expressed from the weight and density of each ingredient in the first organic/inorganic composite porous coating layer 20, from the volume calculated from the thickness, width and length of the first organic/inorganic composite porous coating layer 20.

The porosity of the first organic/inorganic composite porous layer 20 may be determined from scanning electron microscopic (SEM) images, by using a mercury porosimeter or capillary flow porosimeter, or through the BET 6-point method based on nitrogen gas adsorption flow using a porosimetry analyzer (Belsorp-II mini, Bell Japan Inc.).

According to an embodiment of the present disclosure, the first organic/inorganic composite porous layer 20 may have a thickness of 1.5-5.0 $\mu$m on one surface of the porous polymer substrate 10. When the thickness of the first organic/inorganic composite porous layer 20 satisfies the above-defined range, it is possible to provide high adhesion to an electrode and increased cell strength of a battery.

Referring to FIG. 1, the separator 1 for an electrochemical device includes the second organic/inorganic composite porous layer 30 on the other surface of the porous polymer substrate. The second organic/inorganic composite porous layer 30 includes the first inorganic particles 40, second inorganic particles 50 and the second binder polymer.

The second organic/inorganic composite porous layer 30 includes the second binder polymer that attaches the first inorganic particles 40 to one another, attaches the second inorganic particles 50 to one another and attaches the first inorganic particles 40 to the second inorganic particles 50 so that they may retain their binding states (i.e. the second binder polymer interconnects and fixes the first inorganic particles 40, the second inorganic particles 50, and the first inorganic particles 40 with the second inorganic particles 50), and the first inorganic particles 40 and the second inorganic particles 50 may be bound to the porous polymer substrate 10 by the second binder polymer.

Reference will be made to the above description about the first inorganic particles 40.

When only the organic/inorganic composite porous layers including inorganic particles having an average particle diameter of 1-100 nm alone are formed on both surfaces of the porous polymer substrate, the separator has improved high-temperature safety, but there has been a problem in that processability cannot be ensured due to a difference in profile and/or frictional force with a winding core upon the assemblage. For example, there has been a problem in that wrinkling or meandering occurs in the separator during the assemblage of a battery.

The inventors of the present disclosure have found that when the organic/inorganic composite porous layer including the first inorganic particles having an average particle diameter of 1-100 nm is disposed on one surface of the porous polymer substrate, and the organic/inorganic composite porous layer including the first inorganic particles in combination with the second inorganic particles having a larger particle diameter as compared to the first inorganic particles is disposed on the other surface of the porous polymer substrate, it is possible to minimize the problems of slip during the assemblage or tail-out during the discharge of a winding core. The present disclosure is based on this finding.

The second inorganic particles 50 have a larger average particle diameter as compared to the first inorganic particles 40. The second organic/inorganic composite porous layer 30 includes the first inorganic particles 40 in combination with the second inorganic particles 50, and thus can ensure the assembling processability as compared to the use of the first inorganic particles 40 alone. In addition, the second organic/inorganic composite porous layer 30 includes the first inorganic particles 40, and thus can ensure the thermal safety of the separator to a level realized by using the first inorganic particles 40 alone.

According to an embodiment of the present disclosure, the average particle diameter of the second inorganic particles 50 may be 1.01-50 times, 1.15-25 times, 1.5-13.3 times, 13.3-50 times, or 13.3-25 times of the average particle diameter of the first inorganic particles. When the average particle diameter of the second inorganic particles 50 satisfies the above-defined range, it is possible to ensure assembling processability with ease.

According to an embodiment of the present disclosure, the second inorganic particles 50 may have an average particle diameter of 150-800 nm, 200-600 nm, 300-500 nm, 200-500 nm, 200-300 nm, or 200-800 nm. When the average particle diameter of the second inorganic particles 50 satisfies the above-defined range, it is possible to ensure assembling processability with ease.

There is no particular limitation in the second inorganic particles 50, as long as they are electrochemically stable. In other words, there is no particular limitation in the second inorganic particles 50, as long as they cause no oxidation and/or reduction in the range (e.g. 0-5 V based on $Li/Li^+$) of operating voltage of an applicable electrochemical device. Particularly, when using inorganic particles having a high dielectric constant as the second inorganic particles 50, it is possible to improve the ion conductivity of an electrolyte by increasing the dissociation degree of an electrolyte salt, such as a lithium salt, in a liquid electrolyte.

According to an embodiment of the present disclosure, the second inorganic particles 50 may include inorganic particles having a high dielectric constant of 5 or more, preferably 10 or more. Non-limiting examples of the inorganic particles having a dielectric constant of 5 or more may include any one selected from the group consisting of $BaTiO_3$, $Pb(Zr,Ti)O_3$ (PZT), $Pb_{1-x}La_xZr_{1-y}Ti_yO_3$ (PLZT, wherein $0 < x < 1$, $0 < y < 1$), $Pb(Mg_{1/3}Nb_{2/3})O_3$-$PbTiO_3$ (PMN-PT), hafnia ($HfO_2$), $SrTiO_3$, $SnO_2$, $CeO_2$, MgO, $Mg(OH)_2$, NiO, CaO, ZnO, $ZrO_2$, $SiO_2$, $Y_2O_3$, $Al_2O_3$, AlOOH, $Al(OH)_3$, SiC, $TiO_2$, or a mixture thereof.

According to another embodiment of the present disclosure, the second inorganic particles 50 may include inorganic particles having lithium-ion transportability, i.e. inorganic particles containing lithium elements and capable of transporting lithium ions, while not storing lithium. Non-limiting examples of the inorganic particles having lithium-ion transportability include lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$-based glass ($1 < x < 4$, $0 < y < 13$), lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), lithium nitride ($Li_xN_y$, $0 < x < 4$, $0 < y < 2$), $SiS_2$-based glass ($Li_xSi_yS_z$, $0 < x < 3$, $0 < y < 2$, $0 < z < 4$), $P_2S_5$-based glass ($Li_xP_yS_z$, $0 < x < 3$, $0 < y < 3$, $0 < z < 7$), or two or more of them.

According to an embodiment of the present disclosure, in the second organic/inorganic composite porous layer, the weight ratio of the first inorganic particles 40 to the second inorganic particles 50 may be 40:60-92:8, 60:40-92:8, 60:40-84:16, 60:40-76:24, 76:24-92:8, 84:16-92:8, or 76:24-84:16.

When the weight ratio of the first inorganic particles 40 to the second inorganic particles 50 satisfies the above-defined range, it is possible to improve the thermal safety at high temperature and to ensure an arithmetic mean roughness value of the surface of the second organic/inorganic composite porous layer of the separator to a level capable of ensuring assembling processability.

For example, the surface of the second organic/inorganic composite porous layer of the separator for an electrochemical device may have an arithmetic mean roughness of 400-1000 nm, 500-1000 nm, 400-970 nm, or 600-970 nm.

When the arithmetic mean roughness of the surface of the second organic/inorganic composite porous layer of the separator satisfies the above-defined range, it is possible to ensure assembling processability, while preventing the separator from cutting or cracking.

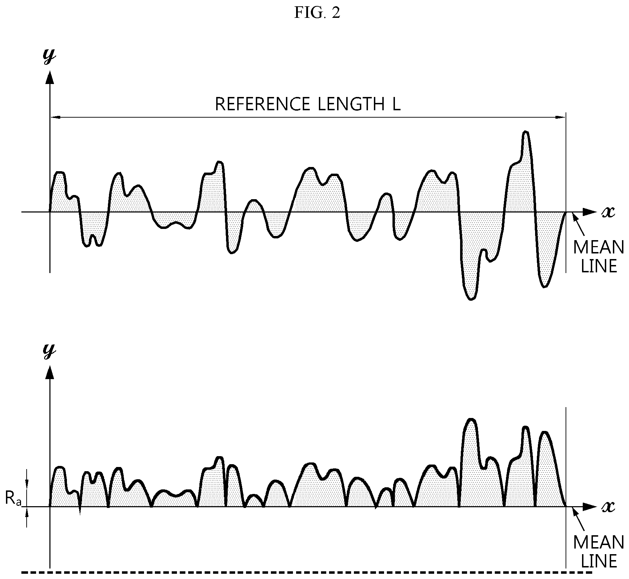

Herein, the arithmetic mean roughness of the surface of the second organic/inorganic composite porous layer of the separator refers to a roughness curve expressed by the following Formula 1, when a reference length of L is extracted in the mean line direction of the roughness curve, in the roughness curve plotted by enlarging the section of the surface of the second organic/inorganic composite porous layer of the separator cut with the plane perpendicular to the surface of the second organic/inorganic composite porous layer of the separator, as depicted in FIG. 2, the mean line direction is taken as x axis, and the height direction is taken as Y axis.

[Formula 1]

$$R_a = \frac{1}{L} \int_0^L |f(x)| dx$$

For example, the arithmetic mean roughness may be determined by using an optical profiler (NV-2700) available from Nano System.

Particularly, when the weight ratio of the first inorganic particles 40 to the second inorganic particles 50 is 60:40-76:24, the surface of the second organic/inorganic composite porous layer may have an arithmetic mean roughness of 600-970 nm. More particularly, when the arithmetic mean roughness of the surface of the second organic/inorganic composite porous layer satisfies the above-defined range, it is possible to ensure assembling processability.

The second binder polymer may be a binder polymer used conventionally for forming an organic/inorganic composite porous layer. According to an embodiment of the present disclosure, the second binder polymer may be the same as or different from the first binder polymer. The second binder polymer may have a glass transition temperature ($T_g$) of -200 to 200°C. When the second binder polymer satisfies the above-defined range of glass transition temperature, it can provide the finished second organic/inorganic composite porous layer 30 with improved mechanical properties, such as flexibility and elasticity. The second binder polymer may have ion conductivity. When the second binder polymer has ion conductivity, it is possible to further improve the performance of a battery. The second binder polymer may have a dielectric constant ranging from 1.0 to 100 (measured at a frequency of 1 kHz), or from 10 to 100. When the second binder polymer has the above-defined range of dielectric constant, it is possible to improve the salt dissociation degree in an electrolyte.

According to an embodiment of the present disclosure, the second binder polymer may include poly(vinylidene fluoride-co-hexafluoropropylene), poly(vinylidene fluoride-co-chlorotrifluoroethylene), poly(vinylidene fluoride-co-tetrafluoroethylene), poly(vinylidene fluoride-co-trichloroethylene), acrylic copolymer, styrene-butadiene copolymer, poly(acrylic acid), poly(methyl methacrylate), poly(butyl acrylate), poly(acrylonitrile), poly(vinyl pyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethylpullulan, cyanoethylpolyvinylalchol, cyanoethyl cellulose, cyanoethyl sucrose, pullulan, or two or more of them.

The acrylic copolymer may include, but is not limited to: ethyl acrylate-acrylic acid-N,N-dimethyl acrylamide copolymer, ethyl acrylate-acrylic acid-2-(dimethylamino)ethyl acrylate copolymer, ethyl acrylate-acrylic acid-N,N-diethylacrylamide copolymer, ethyl acrylate-acrylic acid-2-(diethylamino)ethyl acrylate copolymer, or two or more of them.

According to an embodiment of the present disclosure, the weight ratio of the total inorganic particles of the first inorganic particles 40 and the second inorganic particles 50 to the second binder polymer is determined considering the thickness, pore size and porosity of the finished second organic/inorganic composite porous layer 30, and may be 50:50-99.9:0.1, or 95:5-99.9:0.1. When the weight ratio of the total inorganic particles to the second binder polymer satisfies the above-defined range, it is possible to ensure vacant spaces formed among the first inorganic particles 40, among the second inorganic particles 50, and between the first inorganic particles 40 and the second inorganic particles 50 sufficiently, and thus to ensure the pore size and porosity of the second organic/inorganic composite porous layer 30 with ease. **In** addition, it is possible to ensure the adhesion among the first inorganic particles 40, adhesion among the second inorganic particles 50 and the adhesion between the first inorganic particles 40 and the second inorganic particles 50, and the adhesion between the total inorganic particles and the porous polymer substrate 10 with ease.

Reference will be made to the above description of the first organic/inorganic composite porous layer 20 about the other characteristics of the second organic/inorganic composite porous layer 30.

The separator for an electrochemical device according to an embodiment of the present disclosure includes the organic/inorganic composite porous layers on both surfaces of the porous polymer substrate, and thus can provide improved wettability with an electrolyte. Therefore, the electrochemical device including the separator for an electrochemical device may provide an increased capacity.

**In** addition, since the separator for an electrochemical device includes the organic/inorganic composite porous layers on both surfaces of the porous polymer substrate, it is possible to improve the safety during high-temperature storage, such as storage at about 80°C, and the safety against an internal short-circuit.

The separator for an electrochemical device according to an embodiment of the present disclosure includes the first inorganic particles having an average particle diameter of 1-100 nm on one surface of the porous polymer substrate, and further includes the first inorganic particles and the second inorganic particles having a larger average particle diameter than the average particle diameter of the first inorganic particles on the other surface of the porous polymer substrate, and thus shows improved high-temperature safety and improved assembling processability.

According to an embodiment of the present disclosure, the separator for an electrochemical device may show a show a heat shrinkage of 10% or less, 5% or less, 0-5%, or 0-2%, in each of the machine direction (MD) and the transverse direction (TD), as determined after allowing the separator to stand at 180°C for 1 hour.

According to an embodiment of the present disclosure, the surface of the second organic/inorganic composite porous layer of the separator for an electrochemical device may have an arithmetic mean roughness of 400-1000 nm, 500-1000 nm, 400-970 nm, or 600-970 nm. When the surface of the second organic/inorganic composite porous layer satisfies the above-defined range of arithmetic mean roughness, it is possible ensure assembling processability, while preventing the separator from cutting or cracking. Particularly, when the surface of the second organic/inorganic composite porous layer of the separator has an arithmetic mean roughness of 600-970 nm, it is possible to ensure assembling processability, while preventing the separator from cutting or cracking.

The arithmetic mean roughness of the surface of the second organic/inorganic composite porous layer of the separator for an electrochemical device may be determined by the content ratio of the first inorganic particles to the second inorganic particles, average particle diameter of the first inorganic particles, average particle diameter of the second inorganic particles, surface state of the first inorganic particles and/or the second inorganic particles, or the like.

The separator for an electrochemical device according to an embodiment of the present disclosure may be obtained by the following method, but is not limited thereto.

In another aspect of the present disclosure, there is provided a method for manufacturing a separator for an electrochemical device, including the steps of:

preparing a porous polymer substrate;
coating and drying a slurry for forming a first organic/inorganic composite porous layer containing first inorganic particles, a first binder polymer and a first dispersion medium on one surface of the porous polymer substrate; and
coating and drying a slurry for forming a second organic/inorganic composite porous layer containing the first inorganic particles, second inorganic particles, a second binder polymer and a second dispersion medium on the other surface of the porous polymer substrate,
wherein the first inorganic particles have an average particle diameter of 1-100 nm, and
the second inorganic particles have an average particle diameter larger than the average particle diameter of the first inorganic particles.

Hereinafter, the method for manufacturing a separator for an electrochemical device according to an embodiment of the present disclosure will be explained with reference to the main parts thereof.

First, prepared is a porous polymer substrate. Reference will be made to the above description about the porous polymer substrate.

The porous polymer substrate may be obtained from the above-described materials by forming pores through a conventional process known to those skilled in the art as a process for ensuring high air permeability and porosity, for example, through a wet process using a solvent, a diluent or a pore forming agent, or a dry process using orientation.

Next, the slurry for forming a first organic/inorganic composite porous layer containing first inorganic particles, a first binder polymer and a first dispersion medium is coated and dried on one surface of the porous polymer substrate.

Reference will be made to the above description about the first inorganic particles and the first binder polymer.

The first dispersion medium may function as a solvent capable of dissolving the first binder polymer, or as a dispersion medium not capable of dissolving the first binder polymer but capable of dispersing the first binder polymer, depending on the type of the first binder polymer.

According to an embodiment of the present disclosure, the first dispersion medium may include N-methyl-2-pyrrolidone, acetone, methyl ethyl ketone, dimethylformamide, dimethyl acetamide, methanol, ethanol, isopropyl alcohol or two or more organic solvents of them, or water.

The slurry for forming a first organic/inorganic composite porous layer may be prepared by dissolving or dispersing the first binder polymer in the first dispersion medium, and then adding the first inorganic particles thereto and dispersing them therein. However, preparation of the slurry is not limited thereto.

Non-limiting examples of the method for coating the slurry for forming a first organic/inorganic composite porous layer on one surface of the porous polymer substrate include die coating, roll coating, comma coating, microgravure coating, doctor blade coating, reverse roll coating, direct roll coating, or the like.

According to an embodiment of the present disclosure, the method may further include a step of carrying out phase separation using a non-solvent for the first binder polymer by a conventional process known to those skilled in the art, after coating the slurry for forming a first organic/inorganic composite porous layer on one surface of the porous polymer substrate. The phase separation step may be carried out in order to form a pore structure in the first organic/inorganic composite porous layer.

According to an embodiment of the present disclosure, the phase separation step may be carried out by humidified phase separation. The humidified phase separation may be carried out at a temperature of 15-70°C or 20-50°C under a relative humidity of 15-80% or 30-50%. While the slurry for forming a first organic/inorganic composite porous layer is dried, it has phase transition properties through a vapor-induced phase separation phenomenon known to those skilled in the art.

To carry out the humidified phase separation, a non-solvent for the first binder polymer may be introduced in a gaseous state. The non-solvent for the first binder polymer is not particularly limited, as long as it cannot dissolve the first binder polymer and has partial miscibility with the solvent. For example, a non-solvent providing the first binder polymer with a solubility of less than 5 wt% at 25°C may be used. Particular examples of the non-solvent for the first binder polymer may include water, methanol, ethanol, isopropanol, butanol, butanediol, ethylene glycol, propylene glycol, tripropylene glycol, or two or more of them.

Then, the slurry for forming a second organic/inorganic composite porous layer containing the first inorganic particles, second inorganic particles, second binder polymer and a second dispersion medium is coated and dried on the other surface of the porous polymer substrate.

Reference will be made to the above description about the first inorganic particles, second inorganic particles and the second binder polymer.

The second dispersion medium may function as a solvent capable of dissolving the second binder polymer, or as a dispersion medium not capable of dissolving the second binder polymer but capable of dispersing the second binder polymer, depending on the type of the second binder polymer.

According to an embodiment of the present disclosure, the second dispersion medium may include N-methyl-2-pyrrolidone, acetone, methyl ethyl ketone, dimethylformamide, dimethyl acetamide, methanol, ethanol, isopropyl alcohol or two or more organic solvents of them, or water.

The slurry for forming a second organic/inorganic composite porous layer may be prepared by dissolving or dispersing the second binder polymer in the second dispersion medium, and then adding the first inorganic particles and the second inorganic particles thereto and dispersing them therein. However, preparation of the slurry is not limited thereto.

Non-limiting examples of the method for coating the slurry for forming a second organic/inorganic composite porous layer on the other surface of the porous polymer substrate include die coating, roll coating, comma coating, microgravure coating, doctor blade coating, reverse roll coating, direct roll coating, or the like.

According to an embodiment of the present disclosure, the method may further include a step of carrying out phase separation using a non-solvent for the second binder polymer by a conventional process known to those skilled in the art, after coating the slurry for forming a second organic/inorganic composite porous layer on the other surface of the porous polymer substrate. The phase separation step may be carried out in order to form a pore structure in the second organic/inorganic composite porous layer.

According to an embodiment of the present disclosure, the phase separation step may be carried out by humidified phase separation. The humidified phase separation may be carried out at a temperature of 15-70°C or 20-50°C under a relative humidity of 15-80% or 30-50%. While the slurry for forming a second organic/inorganic composite porous layer is dried, it has phase transition properties through a vapor-induced phase separation phenomenon known to those skilled in the art.

To carry out the humidified phase separation, a non-solvent for the second binder polymer may be introduced in a gaseous state. The non-solvent for the second binder polymer is not particularly limited, as long as it cannot dissolve the second binder polymer and has partial miscibility with the solvent. For example, a non-solvent providing the second binder polymer with a solubility of less than 5 wt% at 25°C may be used. Particular examples of the non-solvent for the second binder polymer may include water, methanol, ethanol, isopropanol, butanol, butanediol, ethylene glycol, propylene glycol, tripropylene glycol, or two or more of them.

According to an embodiment of the present disclosure, the phase separation after coating the slurry for forming a first organic/inorganic composite porous layer may occur simultaneously with the phase separation after coating the slurry for forming a second organic/inorganic composite porous layer.

According to another embodiment of the present disclosure, the phase separation of the slurry for forming a second organic/inorganic composite porous layer may occur after the phase separation of the slurry for forming a first organic/inorganic composite porous layer occurs.

The separator for an electrochemical device may be interposed between a positive electrode and a negative electrode to obtain an electrochemical device.

The electrochemical device according to the present disclosure includes any device which carries out electrochemical reaction, and particular examples thereof include all types of primary batteries, secondary batteries, fuel cells, solar cells or capacitors, such as super capacitor devices.

Particularly, the electrochemical device may be a lithium secondary battery including a lithium metal secondary battery, a lithium-ion secondary battery, a lithium polymer secondary battery, a lithium-ion polymer secondary battery, or the like.

According to an embodiment of the present disclosure, the electrochemical device may be a cylindrical lithium secondary battery. The separator for an electrochemical device according to an embodiment of the present disclosure ensures assembling processability. Therefore, when the separator for an electrochemical device according to an embodiment of the present disclosure is provided as a separator for a cylindrical lithium secondary battery, it is easier to assemble the battery.

The electrodes used in combination with the separator for an electrochemical device according to the present disclosure are not particularly limited, and may be obtained by allowing an electrode active material layer containing an electrode active material, a conductive material and a binder to be bound to an electrode current collector through a method generally known in the art.

Among the electrode active materials, non-limiting examples of the positive electrode active material include, but are not limited to: layered compounds, such as lithium cobalt oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides such as $LiV_3O_8$, $LiV_3O_4$, $V_2O_5$ or $Cu_2V_2O_7$; Ni-site type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); $LiMn_2O_4$ in which Li is partially substituted with an alkaline earth metal ion; disulfide compounds; $Fe_2(MoO_4)_3$; or the like.

Non-limiting examples of the negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used.

Non-limiting examples of the positive electrode current collector include foil made of aluminum, nickel or a combination thereof. Non-limiting examples of the negative electrode current collector include foil made of copper, gold, nickel, copper alloys or a combination thereof.

According to an embodiment of the present disclosure, the conductive material used in each of the negative electrode and the positive electrode may be added in an amount of 1-30 wt% based on the total weight of the active material layer. The conductive material is not particularly limited, as long as it causes no chemical change in the corresponding battery and has conductivity. Particular examples of the conductive material include: graphite, such as natural graphite or artificial graphite; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; conductive materials, such as polyphenylene derivatives, or the like.

According to an embodiment of the present disclosure, the binder used in each of the negative electrode and the positive electrode independently is an ingredient which assists binding between the active material and the conductive material and binding to the current collector. In general, the binder may be added in an amount of 1-30 wt% based on the total weight of the active material layer. Particular examples of the binder include polyvinylidene fluoride (PVDF), polyacrylic acid (PAA), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylenepropylene-diene terpolymer (EPDM), sulfonated EPDM, styrene-butadiene rubber, fluoro-rubber, various copolymers, or the like.

According to an embodiment of the present disclosure, the lithium secondary battery includes an electrolyte, which may include an organic solvent and a lithium salt. In addition, the electrolyte may include an organic solid electrolyte or an inorganic solid electrolyte.

Particular examples of the organic solvent include aprotic organic solvents, such as N-methyl-2-pyrrolidone, ethylene carbonate, propylene carbonate, butylene carbonate, dimethyl carbonate, diethyl carbonate, $\gamma$-butyrolactone, 1,2-dimethoxyethane, tetrahydroxy franc, 2-methyl tetrahydrofuran, dimethyl sulfoxide, 1,3-dioxolan, formamide, dimethyl formamide, dioxolan, acetonitrile, nitromethane, methyl formate, methyl acetate, triphosphate, trimethoxymethane, dioxolan derivatives, sulforane, methyl sulforane, 1,3-dimethyl-2-imidazolidione, propylene carbonate derivatives, tetrahydrofuran derivatives, ethers, methyl propionate, ethyl propionate, or the like.

The lithium salt is a material which can be dissolved in the non-aqueous electrolyte with ease, and particular examples thereof include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborate, lithium lower aliphatic carboxylate, lithium tetraphenyl borate, imide, or the like.

In addition, the electrolyte may further include pyridine, triethyl phosphite, triethanolamine, cyclic ethers, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethaol and aluminum trichloride in order to improve the charge/discharge characteristics, flame resistance, or the like. Optionally, the electrolyte may further include a halogen-containing solvent, such as carbon tetrachloride or trifluoroethylene, in order to impart non-combustibility. The electrolyte may further include carbon dioxide gas in order to improve the high-temperature storage characteristics.

Particular examples of the organic solid electrolyte may include polyethylene derivatives, polyethylene oxide derivatives, polypropylene oxide derivatives, phosphate polymer, polyagitation lysine, polyester sulfide, polyvinyl alcohol, polyvinylidene fluoride, polymers containing an ionically dissociable group, or the like.

Particular examples of the inorganic solid electrolyte may include nitrides, halides and sulfates of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH and $Li_3PO_4$-$Li_2S$-$SiS_2$.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

According to an embodiment of the present disclosure, the process for applying the electrode assembly to the battery may include lamination (stacking) and folding of the separator with electrodes, besides a conventional process, winding.

According to an embodiment of the present disclosure, the separator for a lithium secondary battery may be interposed between the positive electrode and the negative electrode. When an electrode assembly is formed by assembling a plurality of cells or electrodes, the separator may be interposed between the adjacent cells or electrodes. The electrode assembly may have various structures, such as a simple stack type, a jelly-roll type, a stacked-folded type, a laminated-stacked type, or the like.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

Example 1

First, prepared was a polyethylene porous film having a thickness of 11 $\mu$m as a porous polymer substrate.

Next, 1.7 parts by weight of polyacrylic acid as the first binder polymer and 0.3 parts by weight of DS-F1 (polycarboxylic acid, Sannopco Co.) as a dispersant were added to 98 parts by weight of fumed alumina (average particle diameter: 20 nm) as the first inorganic particles, and then the first inorganic particles were pulverized and dispersed by using a ball milling process for total 12 hours to prepare a slurry for forming a first organic/inorganic composite porous layer. Herein, the first inorganic particles had an average particle diameter of 15 nm after pulverization.

The slurry for forming a first organic/inorganic composite porous layer was coated on one surface of the porous polymer substrate through a roll coating process, and then dried at 23°C and a relative humidity of 42% for 1 minute under moisture atmosphere to form the first organic/inorganic composite porous layer.

Then, fumed alumina (average particle diameter: 20 nm) as the first inorganic particles were mixed with alumina (average particle diameter: 500 nm) as the second inorganic particles at a weight ratio of 92:8 in acetone. Then, 1.7 parts by weight of polyacrylic acid as the second binder polymer and 0.3 parts by weight of DS-F1 (polycarboxylic acid, Sannopco Co.) as a dispersant were added to 98 parts by weight of the mixture of fumed alumina with alumina, and the first and the second inorganic particles were pulverized and dispersed by using a ball milling process for total 12 hours to prepare a slurry for forming a second organic/inorganic composite porous layer. Herein, the first inorganic particles had an average particle diameter of 15 nm and the second inorganic particles had an average particle diameter of 200 nm, after pulverization.

The slurry for forming a second organic/inorganic composite porous layer was coated on the other surface of the porous polymer substrate on which the first organic/inorganic composite porous layer was not formed, and then dried at 23°C and a relative humidity of 42% for 1 minute under moisture atmosphere to obtain a separator for an electrochemical device.

Example 2

A separator for an electrochemical device was obtained in the same manner as Example 1, except that fumed alumina as the first inorganic particles was mixed with alumina as the second inorganic particles at a weight ratio of 84:16.

Example 3

A separator for an electrochemical device was obtained in the same manner as Example 1, except that fumed alumina as the first inorganic particles was mixed with alumina as the second inorganic particles at a weight ratio of 76:24.

Example 4

A separator for an electrochemical device was obtained in the same manner as Example 1, except that fumed alumina as the first inorganic particles was mixed with alumina as the second inorganic particles at a weight ratio of 60:40.

Comparative Example 1

A polyethylene porous film having a thickness of 11 $\mu$m was used as a separator for an electrochemical device with no further treatment.

Comparative Example 2

First, prepared was a polyethylene porous film having a thickness of 11 $\mu$m as a porous polymer substrate.
Next, 1.7 parts by weight of polyacrylic acid as a binder polymer and 0.3 parts by weight of DS-F1 (polycarboxylic acid, Sannopco Co.) as a dispersant were added to 98 parts by weight of alumina (average particle diameter: 500 nm) as inorganic particles, and then the inorganic particles were pulverized and dispersed by using a ball milling process for total 12 hours to prepare a slurry for forming an organic/inorganic composite porous layer. Herein, the pulverized inorganic particles had an average particle diameter of 200 nm.
The slurry for forming an organic/inorganic composite porous layer was coated on both surfaces of the porous polymer substrate through a dip coating process, and then dried at 23°C and a relative humidity of 42% under moisture atmosphere for 1 minute to obtain a separator for an electrochemical device.

Comparative Example 3

First, prepared was a polyethylene porous film having a thickness of 11 $\mu$m as a porous polymer substrate.
Next, 1.7 parts by weight of polyacrylic acid as a binder polymer and 0.3 parts by weight of DS-F1 (polycarboxylic acid, Sannopco Co.) as a dispersant were added to 92 parts by weight of fumed alumina (average particle diameter: 20 nm) as inorganic particles, and then the inorganic particles were pulverized and dispersed by using a ball milling process for total 12 hours to prepare a slurry for forming an organic/inorganic composite porous layer. Herein, the pulverized inorganic particles had an average particle diameter of 15 nm.
The slurry for forming an organic/inorganic composite porous layer was coated on both surfaces of the porous polymer substrate through a dip coating process, and then dried at 23°C and a relative humidity of 42% under moisture atmosphere for 1 minute to obtain a separator for an electrochemical device.

Test Example 1: Method for Determining Average Particle Diameter of Inorganic Particles

Each of the first inorganic particles, second inorganic particles and inorganic particles contained in the finished organic/inorganic composite porous layers according to Examples 1-4 and Comparative Examples 2 and 3 were dispersed in a dispersion medium, and introduced to a laser diffraction particle size analyzer (Microtrac S3500) to measure a difference in diffraction pattern depending on particle size, when the particles pass through laser beams, and then particle size distribution was calculated. Then, the average particle diameter ($D_{50}$) was determined by calculating the particle diameter at the point of 50% in the particle number accumulated distribution depending on particle diameter in the analyzer system.

Test Example 2: Determination of Physical Properties of Separators

Each of the separators according to Examples 1-4 and Comparative Examples 1-3 was determined in terms of air permeability, weight per unit area, electrical resistance, puncture strength, arithmetic mean roughness of the surface of the second organic/inorganic composite porous layer, and heat shrinkage in each of the machine direction and the transverse direction, as determined after allowing the separator to stand at 180°C for 1 hour. The results are shown in the following Table 1.

(1) Evaluation of Air Permeability

Air permeability (Gurley) was determined according to the method of ASTM D726-94. Gurley used herein refers to the resistance of a separator against air flow and was determined by using Gurley densometer. The air permeability value defined herein is expressed by the time (second), i.e. air permeation time, required for 100 cc of air to pass through the section of 1 in$^2$ of a separator under a pressure of 12.2 in H$_2$O.

(2) Evaluation of Weight per Unit Area

The weight per unit area (g/m$^2$) was evaluated by preparing a sample having a width of 1 m and a length of 1 m and measuring the weight of the sample.

(3) Evaluation of Electrical Resistance

The electrical resistance was determined by fabricating a coin cell by using each of the separators according to Examples 1-4 and Comparative Examples 1-3, allowing the coin cell to stand at room temperature for 1 day, and the resistance of the separator was measured by impedance analysis. The coin cell was fabricated as follows.

Manufacture of Negative Electrode

Artificial graphite as a negative electrode material, denka black as a conductive material and polyvinylidene fluoride (PVDF) as a binder were mixed at a weight ratio of 75:5:20, and N-methyl pyrrolidone (NMP) as a solvent was added thereto to prepare a negative electrode slurry.
The negative electrode slurry was coated on a copper current collector at a loading amount of 3.8 mAh/cm$^2$, followed by drying, to obtain a negative electrode.

Manufacture of Positive Electrode

LiCoO$_2$ as a positive electrode active material, denka black as a conductive material and polyvinylidene fluoride (PVDF) as a binder were added to N-methyl pyrrolidone (NMP) as a solvent at a weight ratio of 85:5:10 to prepare a positive electrode active material slurry. The positive electrode active material slurry was coated on a sheet-like aluminum current collector, followed by drying, to form a positive electrode active material layer with a final positive electrode loading amount of 3.3 mAh/cm$^2$.

Manufacture of Coin Cell

The separator according to each of Examples and Comparative Examples was interposed between the negative electrode and the positive electrode obtained as described above, and a non-aqueous electrolyte (1 M LiPF$_6$, ethylene carbonate (EC)/propylene carbonate (PC)/diethyl carbonate (DEC), volume ratio 3:3:4) was injected thereto to obtain a coin cell.

(4) Evaluation of Puncture Strength

A specimen having a size of 50 mm x 50 mm was prepared.
According to ASTM D2582, a round tip having a diameter of 1 mm was allowed to operate at a rate of 120 mm/min, and puncture strength was determined.

(5) Evaluation of Arithmetic Mean Roughness of Surface

The arithmetic mean roughness (Ra) of the surface of the separator according to each of Examples 1-4 and Comparative Example 1-3 was determined by using an optical profiler (NV-2700) available from Nano System Co.
In the case of Examples 1-4, the arithmetic mean roughness (Ra) of the surface of the second organic/inorganic composite porous layer was determined.
In the case of Comparative Example 1, the arithmetic mean roughness (Ra) of the surface of the polyethylene porous film was determined. In the case of Comparative Examples 2 and 3, the arithmetic mean roughness (Ra) of the surface of the organic/inorganic composite porous layer was determined.

(6) Evaluation of Heat Shrinkage after Standing at 180°C for 1 Hour

Each of the separators according to Examples 1-4 and Comparative Examples 1-3 was cut into a size of 50 mm (length) x 50 mm (width) to prepare a specimen. The heat shrinkage was calculated according to the following formula by allowing the specimen to stand in an oven heated at 180°C for 1 hour, recovering the specimen, and measuring a change in length in each of the machine direction and the transverse direction:

Heat shrinkage after standing at 180°C for 1 hour = [(Dimension before shrinking - Dimension after shrinking) / Dimension before shrinking] x 100

[Table 1]

| | | Ex. 1 | Ex. 2 | Ex. 3 | Ex. 4 | Comp. Ex. 1 | Comp. Ex. 2 | Comp. Ex. 3 |
|---|---|---|---|---|---|---|---|---|
| Thickness ($\mu$m) | | 13.0 | 13.0 | 12.7 | 12.8 | 11.1 | 12.9 | 12.6 |
| Air permeability (sec/100 cc) | | 140 | 145 | 145 | 137 | 85 | 124 | 154 |
| Weight per unit area (g/m$^2$) | | 8.22 | 8.30 | 8.21 | 8.20 | 5.53 | 8.29 | 8.15 |
| Electrical resistance ($\Omega$) | | 0.68 | 0.66 | 0.67 | 0.67 | 0.50 | 0.61 | 0.69 |
| Puncture strength (gf) | | 507 | 508 | 483 | 482 | 470 | 504 | 454 |
| Arithmetic mean roughness of surface (Ra) | | 410 | 550 | 930 | 970 | 180 | 610 | 201 |
| Heat shrinkage after standing at 180°C for 1 hour (%) | MD | 1.5 | 1.8. | 1.8 | 1.8 | Not available | ≥80 | 4 |
| | TD | 1.5 | 1.8 | 1.8 | 1.7 | Not available | ≥80 | 4.2 |

As can be seen from Table 1, in the case of each of the separators according to Examples 1-4, the arithmetic mean roughness of the surface of the second organic/inorganic composite porous layer of the separator is larger than the arithmetic mean roughness of the surface of the organic/inorganic composite porous layer of the separator according to Comparative Example 3.

Particularly, the arithmetic mean roughness of the surface of the second organic/inorganic composite porous layer of the separator according to each of Examples 3 and 4 satisfies the level of arithmetic mean roughness of the surface of the organic/inorganic composite porous layer of the separator according to Comparative Example 2.

In addition, it can be seen that each of the separators according to Examples 1-4 shows a significantly low heat shrinkage in each of the machine direction (MD) and the transverse direction (TD), as determined after allowing the separator to stand at 180°C for 1 hour.

On the contrary, the separator according to Comparative Example 1 is broken after being allowed to stand at 180°C for 1 hour, and thus it is difficult to determine the heat shrinkage.

The separator according to Comparative Example 2 uses only the inorganic particles having a relatively large average particle diameter, and thus shows a significantly worse result in terms of heat shrinkage in each of the machine direction (MD) and the transverse direction (TD), as determined after allowing the separator to stand at 180°C for 1 hour.

The separator according to Comparative Example 3 uses only the inorganic particles having an average particle diameter of 1-100 nm, and thus shows a good result in terms of heat shrinkage in each of the machine direction (MD) and the transverse direction (TD), as determined after allowing the separator to stand at 180°C for 1 hour, but provides a significantly low arithmetic mean roughness value of the surface of the organic/inorganic composite porous layer of the separator. Therefore, it is difficult for the separator to ensure assembling processability.

Test Example 3: Evaluation of Arithmetic Mean Roughness of Separator Surface

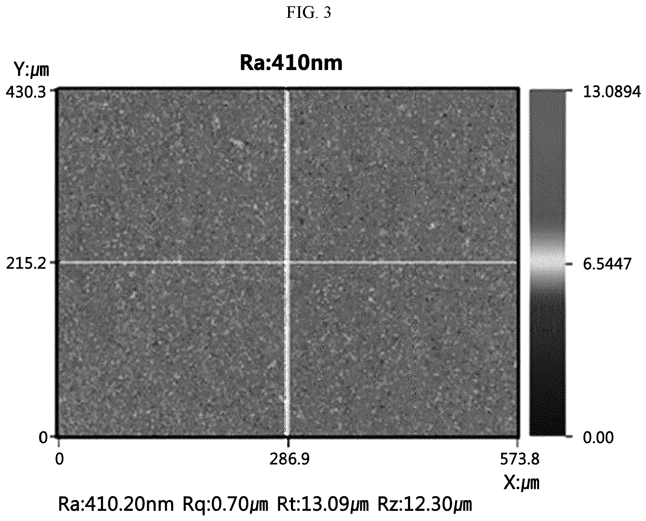

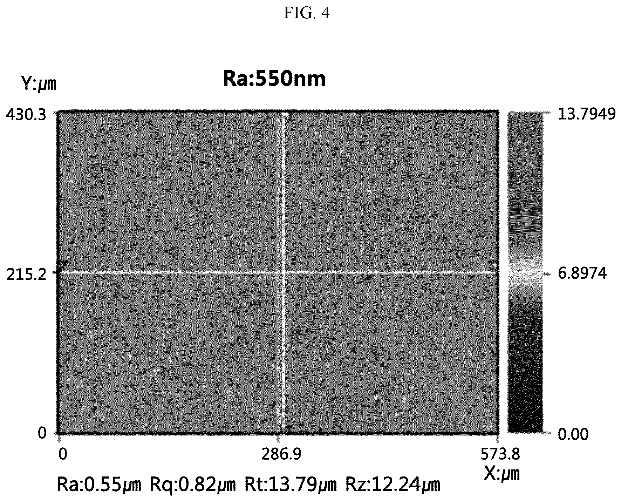

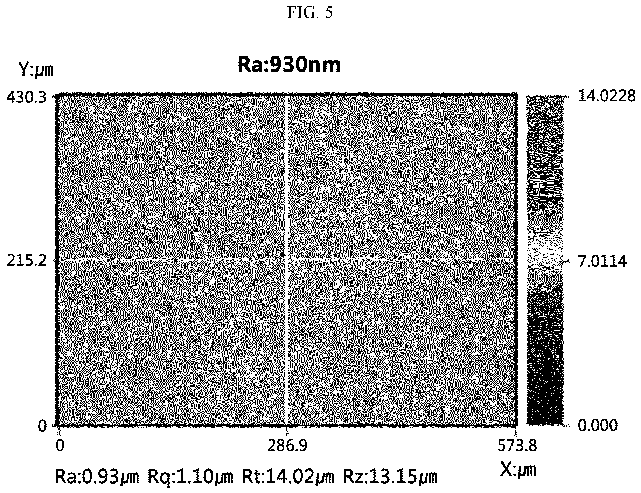

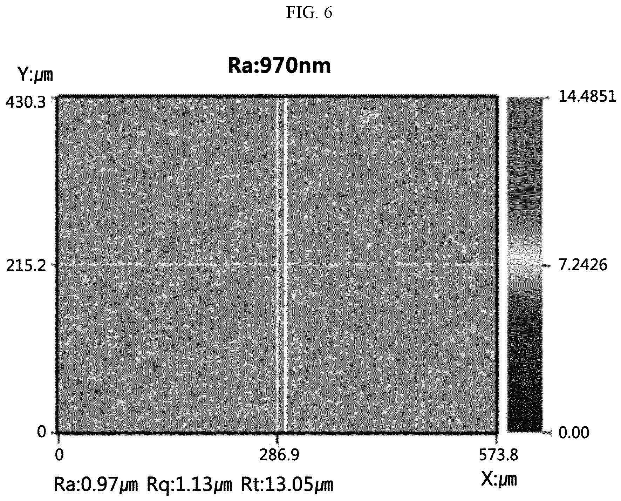

The arithmetic mean roughness of the surface of the second organic/inorganic composite porous layer in the separator according to each of Examples 1-4 was determined by using an optical profiler (NV-2700) available from Nano System Co. The results are shown in FIGS. 3-6.

[Description of Drawing Numerals]

1: Separator for electrochemical device
10: Porous polymer substrate
20: First organic/inorganic composite porous layer
30: Second organic/inorganic composite porous layer
40: First inorganic particles
50: Second inorganic particles

**Claims**

1. A separator for an electrochemical device, comprising:

   a porous polymer substrate;
   a first organic/inorganic composite porous layer disposed on one surface of the porous polymer substrate and comprising first inorganic particles and a first binder polymer; and
   a second organic/inorganic composite porous layer disposed on the other surface of the porous polymer substrate and comprising the first inorganic particles, second inorganic particles and a second binder polymer,
   wherein the first inorganic particles have an average particle diameter of 1-100 nm, and
   the second inorganic particles have an average particle diameter larger than the average particle diameter of the first inorganic particles, and wherein the first inorganic particles comprise fumed alumina, fumed silica, fumed titanium dioxide, or two or more of them.

2. The separator for an electrochemical device according to claim 1, wherein the second inorganic particles have an average particle diameter of 150-800 nm.

3. The separator for an electrochemical device according to claim 1, wherein the weight ratio of the first inorganic particles to the second inorganic particles in the second organic/inorganic composite porous layer is 40:60-92:8.

4. The separator for an electrochemical device according to claim 1, wherein the second inorganic particles comprise $BaTiO_3$, $Pb(Zr,Ti)O_3$ (PZT), $Pb_{1-x}La_xZr_{1-y}Ti_yO_3$ (PLZT, wherein $0 < x < 1$, $0 < y < 1$), $Pb(Mg_{1/3}Nb_{2/3})O_3$-$PbTiO_3$ (PMN-PT), hafnia ($HfO_2$), $SrTiO_3$, $SnO_2$, $CeO_2$, $MgO$, $Mg(OH)_2$, $NiO$, $CaO$, $ZnO$, $ZrO_2$, $SiO_2$, $Y_2O_3$, $Al_2O_3$, $AlOOH$, $Al(OH)_3$, $SiC$, $TiO_2$, lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$-based glass ($1 < x < 4$, $0 < y < 13$), lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), lithium nitride ($Li_xN_y$, $0 < x < 4$, $0 < y < 2$), $SiS_2$-based glass ($Li_xSi_yS_z$, $0 < x < 3$, $0 < y < 2$, $0 < z < 4$), $P_2S_5$-based glass ($Li_xP_yS_z$, $0 < x < 3$, $0 < y < 3$, $0 < z < 7$), or two or more of them.

5. The separator for an electrochemical device according to claim 1, wherein the surface of the second organic/inorganic composite porous layer has an arithmetic mean roughness of 400-1000 nm, measured as described in the description.

6. The separator for an electrochemical device according to claim 1, which shows a heat shrinkage of 10% or less in each of the machine direction (MD) and the transverse direction (TD), as determined after allowing the separator to stand at 180°C for 1 hour, measured as described in the description.

7. The separator for an electrochemical device according to claim 1, wherein the first binder polymer comprises poly(vinylidene fluoride-co-hexafluoropropylene), poly(vinylidene fluoride-co-chlorotrifluoroethylene), poly(vinylidene fluoride-co-tetrafluoroethylene), poly(vinylidene fluoride-co-trichloroethylene), acrylic copolymer, styrene-butadiene copolymer, poly(acrylic acid), poly(methyl methacrylate), poly(butyl acrylate), poly(acrylonitrile), poly(vinyl pyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethylpullulan, cyanoethylpolyvinylalchol, cyanoethyl cellulose, cyanoethyl sucrose, pullulan, or two or more of them.

8. The separator for an electrochemical device according to claim 1, wherein the second binder polymer comprises poly(vinylidene fluoride-co-hexafluoropropylene), poly(vinylidene fluoride-co-chlorotrifluoroethylene), poly(vinylidene fluoride-co-tetrafluoroethylene), poly(vinylidene fluoride-co-trichloroethylene), acrylic copolymer, styrene-butadiene copolymer, poly(acrylic acid), poly(methyl methacrylate), poly(butyl acrylate), poly(acrylonitrile), poly(vinyl pyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethylpullulan, cyanoethylpolyvinylalchol, cyanoethyl cellulose, cyanoethyl sucrose, pullulan, or two or more of them.

9. An electrochemical device comprising a positive electrode, a negative electrode and a separator interposed between the positive electrode and the negative electrode, wherein the separator is the separator for an electrochemical device as defined in any one of claims 1 to 8.

10. The electrochemical device according to claim 9, which is a cylindrical lithium secondary battery.

**Patentansprüche**

1. Separator für eine elektrochemische Vorrichtung, umfassend

   ein poröses Polymersubstrat;
   eine erste poröse Schicht aus organischem/anorganischem Verbundstoff, die auf einer Oberfläche des porösen Polymersubstrats angeordnet ist und erste anorganische Teilchen sowie ein erstes Bindemittelpolymer umfasst; und
   eine zweite poröse Schicht aus organischem/anorganischem Verbundstoff, die auf der anderen Oberfläche des porösen Polymersubstrats angeordnet ist und die ersten anorganischen Teilchen, zweite anorganische Teilchen sowie ein zweites Bindemittelpolymer umfasst,
   wobei die ersten anorganischen Teilchen einen mittleren Teilchendurchmesser von 1-100 nm aufweisen und die zweiten anorganischen Teilchen einen mittleren Teilchendurchmesser aufweisen, der größer ist als der mittlere Teilchendurchmesser der ersten anorganischen Teilchen, und wobei die ersten anorganischen Teilchen pyrogenes Aluminiumoxid, pyrogenes Siliciumdioxid, pyrogenes Titandioxid oder zwei oder mehr davon umfassen.

2. Separator für eine elektrochemische Vorrichtung gemäß Anspruch 1, wobei die zweiten anorganischen Teilchen einen mittleren Teilchendurchmesser von 150-800 nm aufweisen.

3. Separator für eine elektrochemische Vorrichtung gemäß Anspruch 1, wobei das Gewichtsverhältnis der ersten anorganischen Teilchen zu den zweiten anorganischen Teilchen in der zweiten porösen Schicht aus organischem/anorganischem Verbundstoff 40:60-92:8 beträgt.

4. Separator für eine elektrochemische Vorrichtung gemäß Anspruch 1, wobei die zweiten anorganischen Teilchen $BaTiO_3$, $Pb(Zr,Ti)O_3$ (PZT), $Pb_{1-x}La_xZr_{1-y}Ti_yO_3$ (PLZT, wobei $0 < x < 1$, $0 < y < 1$), $Pb (Mg_{1/3}Nb_{2/3})O_3$-$PbTiO_3$ (PMN-PT), Hafniumoxid ($HfO_2$), $SrTiO_3$, $SnO_2$, $CeO_2$, $MgO$, $Mg(OH)_2$, $NiO$, $CaO$, $ZnO$, $ZrO_2$, $SiO_2$, $Y_2O_3$, $Al_2O_3$, $AlOOH$, $Al(OH)_3$, $SiC$, $TiO_2$, Lithiumphosphat ($Li_3PO_4$), Lithiumtitanphosphat ($Li_xTi_y(PO_4)_3$, $0 < x < 2$, $0 < y < 3$), Lithium-Aluminium-Titan-Phosphat ($Li_xAl_yTi_z(PO_4)_3$, $0 < x < 2$, $0 < y < 1$, $0 < z < 3$), Glas auf $(LiAlTiP)_xO_y$-Basis ($1 < x < 4$, $0 < y < 13$), Lithium-Lanthan-Titanat ($Li_xLa_yTiO_3$, $0 < x < 2$, $0 < y < 3$), Lithium-Germanium-Thiophosphat ($Li_xGe_yP_zS_w$, $0 < x < 4$, $0 < y < 1$, $0 < z < 1$, $0 < w < 5$), Lithiumnitrid ($Li_xN_y$, $0 < x < 4$, $0 < y < 2$), Glas auf $SiS_2$-Basis ($Li_xSi_yS_z$, $0 < x < 3$, $0 < y < 2$, $0 < z < 4$), Glas auf $P_2S_5$-Basis ($Li_xP_yS_z$, $0 < x < 3$, $0 < y < 3$, $0 < z < 7$) oder zwei oder mehr davon.

5. Separator für eine elektrochemische Vorrichtung gemäß Anspruch 1, wobei die Oberfläche der zweiten porösen Schicht aus organischem/anorganischem Verbundstoff eine arithmetische mittlere Rauheit von 400-1000 nm aufweist, gemessen wie in der Beschreibung beschrieben.

6. Separator für eine elektrochemische Vorrichtung gemäß Anspruch 1, der in der Maschinenrichtung (MD) und in der Querrichtung (TD) jeweils eine Wärmeschrumpfung von 10 % oder weniger aufweist, bestimmt nach einer Stunde Standzeit des Separators bei 180 °C, gemessen wie in der Beschreibung beschrieben.

7. Separator für eine elektrochemische Vorrichtung gemäß Anspruch 1, wobei das erste Bindemittelpolymer Poly(vinylidenfluorid-co-hexafluorpropylen), Poly(vinylidenfluorid-co-chlortrifluorethylen), Poly(vinylidenfluorid-co-tetrafluorethylen), Poly(vinylidenfluorid-co-trichlorethylen), Acrylcopolymer, Styrol-Butadien-Copolymer, Poly(acrylsäure), Poly(methylmethacrylat), Poly(butylacrylat), Poly(acrylnitril), Poly(vinylpyrrolidon), Poly(vinylalkohol), Poly(vinylacetat), Poly(ethylen-co-vinylacetat), Poly(ethylenoxid), Poly(arylat), Celluloseacetat, Celluloseacetatbutyrat, Celluloseacetatpropionat, Cyanoethylpullulan, Cyanoethylpolyvinylalkohol, Cyanoethylcellulose, Cyanoethylsaccharose, Pullulan oder zwei oder mehr davon umfasst.

8. Separator für eine elektrochemische Vorrichtung gemäß Anspruch 1, wobei das zweite Bindemittelpolymer Poly(vinylidenfluorid-co-hexafluorpropylen), Poly(vinylidenfluorid-co-chlortrifluorethylen), Poly(vinylidenfluorid-co-tetrafluorethylen), Poly(vinylidenfluorid-co-trichlorethylen), Acrylcopolymer, Styrol-Butadien-Copolymer, Poly(acrylsäure), Poly(methylmethacrylat), Poly(butylacrylat), Poly(acrylnitril), Poly(vinylpyrrolidon), Poly(vinylalkohol), Poly(vinylacetat), Poly(ethylen-co-vinylacetat), Poly(ethylenoxid), Poly(arylat), Celluloseacetat, Celluloseacetatbutyrat, Celluloseacetatpropionat, Cyanoethylpullulan, Cyanoethylpolyvinylalkohol, Cyanoethylcellulose, Cyanoethylsaccharose, Pullulan oder zwei oder mehr davon umfasst.

9. Elektrochemische Vorrichtung, umfassend eine positive Elektrode, eine negative Elektrode und einen zwischen der positiven Elektrode und der negativen Elektrode angeordneten Separator, wobei der Separator der Separator für eine elektrochemische Vorrichtung gemäß mindestens einem der Ansprüche 1 bis 8 ist.

10. Elektrochemische Vorrichtung gemäß Anspruch 9, die eine zylindrische Lithium-Sekundärbatterie ist.

**Revendications**

1. Séparateur pour un dispositif électrochimique, comprenant :

un substrat polymère poreux ;
une première couche poreuse composite organique/inorganique disposée sur une surface du substrat polymère poreux et comprenant des premières particules inorganiques et un premier polymère liant ; et
une deuxième couche poreuse composite organique/inorganique disposée sur l'autre surface du substrat polymère poreux et comprenant les premières particules inorganiques, des deuxièmes particules inorganiques et un deuxième polymère liant,
dans lequel les premières particules inorganiques présentent un diamètre de particule moyen de 1 à 100 nm, et les deuxièmes particules inorganiques présentent un diamètre de particule moyen supérieur au diamètre de particule moyen des premières particules inorganiques, et dans lequel les premières particules inorganiques comprennent de l'alumine pyrogénée, de la silice pyrogénée, du dioxyde de titane pyrogéné ou au moins deux de ces éléments.

2. Séparateur pour un dispositif électrochimique selon la revendication 1, dans lequel les deuxièmes particules inorganiques présentent un diamètre de particule moyen de 150 à 800 nm.

3. Séparateur pour un dispositif électrochimique selon la revendication 1, dans lequel le rapport pondéral des premières particules inorganiques sur les deuxièmes particules inorganiques dans la deuxième couche poreuse composite organique/inorganique va de 40:60 à 92:8.

4. Séparateur pour un dispositif électrochimique selon la revendication 1, dans lequel les deuxièmes particules inorganiques comprennent $BaTiO_3$, $Pb(Zr,Ti)O_3$ (PZT), $Pb_{1-x}La_xZr_{1-y}Ti_yO_3$ (PLZT, dans lequel $0 < x < 1$, $0 < y < 1$), $Pb(Mg_{1/3}Nb_{2/3})O_3$-$PbTiO_3$ (PMN-PT), de l'oxyde d'hafnium ($HfO_2$), $SrTiO_3$, $SnO_2$, $CeO_2$, MgO, $Mg(OH)_2$, NiO, CaO, ZnO, $ZrO_2$, $SiO_2$, $Y_2O_3$, $Al_2O_3$, AlOOH, $Al(OH)_3$, SiC, $TiO_2$, du phosphate de lithium ($Li_3PO_4$), du phosphate de lithium et de titane ($Li_xTi_y(PO_4)_3$, $0 < x < 2$, $0 < y < 3$), du phosphate de lithium, d'aluminium et de titane ($Li_xAl_yTi_z(PO_4)_3$, $0 < x < 2$, $0 < y < 1$, $0 < z < 3$), du verre à base de $(LiAlTiP)_xO_y$ ($1 < x < 4$, $0 < y < 13$), du titanate de lithium et de lanthane ($Li_xLa_yTiO_3$, $0 < x < 2$, $0 < y < 3$), du thiophosphate de lithium et de germanium ($Li_xGe_yP_zS_w$, $0 < x < 4$, $0 < y < 1$, $0 < z < 1$, $0 < w < 5$), du nitrure de lithium ($Li_xN_y$, $0 < x < 4$, $0 < y < 2$), du verre à base de $SiS_2$ ($Li_xSi_yS_z$, $0 < x < 3$, $0 < y < 2$, $0 < z < 4$), du verre à base de $P_2S_5$ ($Li_xP_yS_z$, $0 < x < 3$, $0 < y < 3$, $0 < z < 7$) ou au moins deux de ces composés.

5. Séparateur pour un dispositif électrochimique selon la revendication 1, dans lequel la surface de la deuxième couche poreuse composite organique/inorganique présente une rugosité moyenne arithmétique de 400 à 1000 nm, mesurée comme décrit dans la description.

6. Séparateur pour un dispositif électrochimique selon la revendication 1, qui présente un retrait thermique inférieur ou égal à 10 % dans chacune de la direction machine (MD) et la direction transversale (TD), tel que déterminé après avoir laissé le séparateur au repos à 180 °C pendant une heure, mesuré comme décrit dans la description.

7. Séparateur pour un dispositif électrochimique selon la revendication 1, dans lequel le premier polymère liant comprend du poly(fluorure de vinylidène-co-hexafluoropropylène), du poly(fluorure de vinylidène-co-chlorotrifluoroéthylène), du poly(fluorure de vinylidène-co-tétrafluoroéthylène), du poly(fluorure de vinylidène-co-trichloroéthylène), un copolymère acrylique, un copolymère styrène-butadiène, du poly(acide acrylique), du poly(méthacrylate de méthyle), du poly(acrylate de butyle), du poly(acrylonitrile), de la poly(vinylpyrrolidone), du poly(alcool vinylique), du poly(acétate de vinyle), du poly(éthylène-co-acétate de vinyle), du poly(oxyde d'éthylène), du poly(arylate), de l'acétate de cellulose, de l'acétate-butyrate de cellulose, de l'acétate-propionate de cellulose, du cyanoéthylpullulane, du poly(vinylalcool) cyanoéthylé, de la cyanoéthylcellulose, du saccharose cyanoéthylé, du pullulane ou au moins deux de ces composés.

8. Séparateur pour un dispositif électrochimique selon la revendication 1, dans lequel le deuxième polymère liant comprend du poly(fluorure de vinylidène-co-hexafluoropropylène), du poly(fluorure de vinylidène-co-chlorotrifluoroéthylène), du poly(fluorure de vinylidène-co-tétrafluoroéthylène), du poly(fluorure de vinylidène-co-trichloroéthylène), un copolymère acrylique, un copolymère styrène-butadiène, du poly(acide acrylique), du poly(méthacrylate de méthyle), du poly(acrylate de butyle), du poly(acrylonitrile), du poly(pyrrolidone de vinyle), du poly(alcool vinylique), du poly(acétate de vinyle), du poly(éthylène-co-acétate de vinyle), du poly(oxyde d'éthylène), du poly(arylate), de l'acétate de cellulose, de l'acétate-butyrate de cellulose, de l'acétate-propionate de cellulose, du cyanoéthylpullulane, du poly(vinylalcool) cyanoéthylé, de la cellulose cyanoéthylée, du saccharose cyanoéthylé, du pullulane ou au moins deux de ces composés.

9.  Dispositif électrochimique comprenant une électrode positive, une électrode négative et un séparateur interposé entre l'électrode positive et l'électrode négative, dans lequel le séparateur est le séparateur pour un dispositif électrochimique tel que défini dans l'une quelconque des revendications 1 à 8.

10. Séparateur pour un dispositif électrochimique selon la revendication 9, qui est une batterie secondaire au lithium cylindrique.

FIG. 1

1

FIG. 2

FIG. 3

**Ra:410nm**

Ra:410.20nm Rq:0.70μm Rt:13.09μm Rz:12.30μm

FIG. 4

**Ra:550nm**

Ra:0.55μm Rq:0.82μm Rt:13.79μm Rz:12.24μm

FIG. 5

Ra:930nm

FIG. 6

**Ra:970nm**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210069553
- KR 20200078011 A
- KR 20130123568 A

- US 2020203694 A1
- US 2017373292 A1